# EUROPEAN PATENT SPECIFICATION

(11) **EP 0 661 769 B1**
(45) Date of publication and mention of the grant of the patent: **16.09.1998**
(21) Application number: 94403063.4
(22) Date of filing: 30.12.1994
(51) Int. Cl.: H01M 10/02, H01M 2/30

(54) **Improvements in or relating to battery pack arrangement**
Verbesserungen an Batteriepaketen
Perfectionnements concernant un ensemble de batterie

(30) Priority: 31.12.1993 FR 9315981
(43) Date of publication of application: 05.07.1995
(73) Proprietor: TEXAS INSTRUMENTS FRANCE, 06271 Villeneuve Loubet Cédex (FR); TEXAS INSTRUMENTS INCORPORATED, Dallas Texas 75265 (US)
(72) Inventor: Farley, Joseph, F-06270 Villeneuve Loubet (FR)
(74) Representative: Obolensky, Michel

(56) References cited:
- EP-A- 0 539 640
- EP-A- 0 545 747
- EP-A- 0 546 872
- DD-A- 251 440
- GB-A- 2 251 515
- US-A- 5 057 383
- US-A- 5 206 097

## Description

This invention relates to improvements in or relating to battery packs, particularly to those rechargeable battery packs which can be used both in intelligent and non-intelligent devices. Intelligent devices include those which are capable of transmitting or receiving digital data, monitoring battery parameters etc.

It is known to provide a battery pack for many devices. One particular application for which a battery pack is required is a device which is intended to be either hand held or portable. Portable video cameras, or camcorders as they are now more commonly known, are generally provided with a battery pack. This pack is used to power the device and is replaced when the battery voltage has fallen below the threshold value representing the lower state of charge limit that is safe for operaton of the device and for longevity of the cells. There is generally a warning signal produced by the device that the battery is reaching this threshold. The operator then removes the discharged battery pack, recharges it and replaces it on the device (or places another charged battery pack on the device). There is no damage to the stored images on the video tape should the charge within the battery pack fall to a level at which the camera ceases to operate. There are other devices such as, for example, radios, portable television sets, portable telephones and the like where loss of battery power would cause no damage to the device or any information stored in relation to the device.

Certain battery powered devices are much more sensitive to loss or drop of battery power. Such devices include portable computers and other intelligent devices. Here it is essential that the computer monitors the the state of charge of the battery pack to ensure that there is always sufficient power for the application under current use by the computer. To facilate this, battery packs are now containing intelligence that accurately calculates their state of charge, and includes a data bus through which it can communicate this state of charge and other data, for example, cell temperature, voltage, current present capacity and useage history, to the computer. This enables the computer to track and indicate to the user the state of charge of the battery pack and when a low battery power situation is occuring, to shut down operations in a timely manner and take all necessary precautions to ensure that the information and data stored in its volatile memory is not lost. Also, through the addition of LEDs or LCD on the battery pack, information regarding the charge (or other) status may be displayed even when the device is switched off. To this end it is therefore currently necessary to provide an "intelligent battery pack" for computer and like applications and a "non-intelligent battery pack" for applications not designed for digital communication with the battery pack. This means that if the user has one of each type of device he will require different battery packs for each device. This obviously can increase the cost to the user since he will require two battery packs. It will also be cost effective for the battery pack manufacturer and end equipment manufacturer to utilise an existing high volume standard battery pack format.

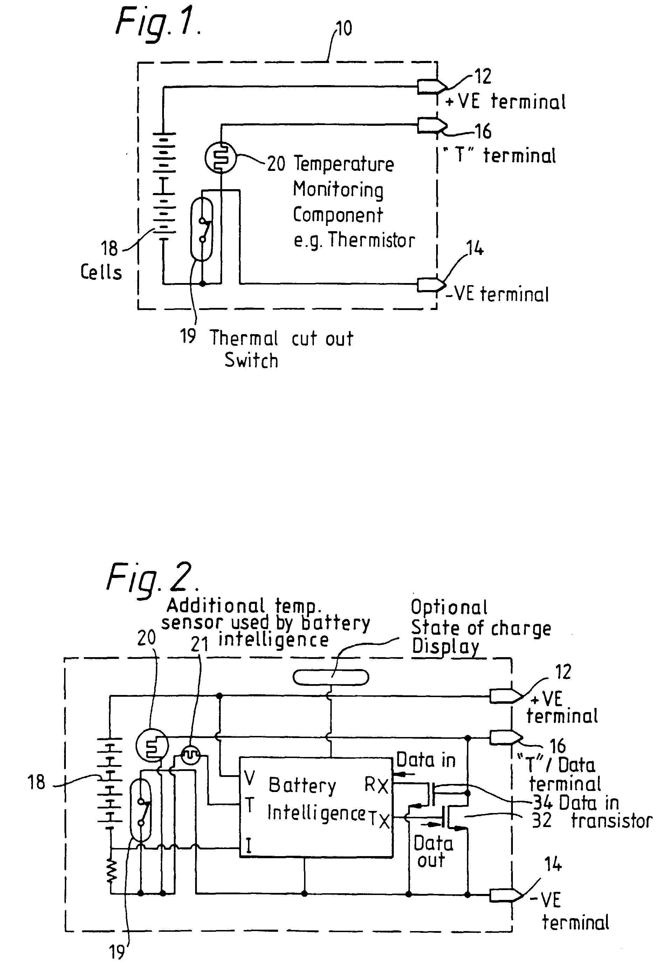

The majority of camcorders use standard pinout 3-terminal video battery packs; examples of these are the Sony and Panasonic arrangements. These battery pack are in very high volume production. They have the following terminals, the positive (+ve) and negative (-ve) ones that supply power to the devices and the "T" terminal that provides a means of measurement of the cell temperature. The "T" terminal is connected to a component such as a thermistor whose resistance varies in a known manner with increasing and decreasing temperatures at 25 Centigrade this resistance can be for example 10 KΩ. Figure 1 is schematic diagram of a battery pack including this temperature terminal. The battery pack 10 includes a positive terminal 12, a negative terminal 14 and the temperature terminal 16. The positive and negative terminals are respectively connected to the positive and negative terminals of the battery, a thermal protection switch 19 is present in the current path and is locally juxtaposed on the cells alongside the temperature measuring device, for example, a thermistor 20 which is connected to the battery's "T" terminal 16.

One object of the present invention is to provide a battery pack which can be used with both intelligent and non-intelligent devices. This enables the user to be able to interchange the battery pack from one device to another.

According to one aspect of the present invention there is provided a battery pack arrangement having a switching means capable of switching the operation of the battery pack from one mode to another in response to an external signal generated by equipment being powered by the battery pack.

The battery pack of the present invention is interchangeable between both intelligent and non-intelligent devices and is capable of identifying which particular device it is connected to at any one time through the use of the multipurpose "T" terminal.

Reference will now be made, by way of example, to the accompanying drawings, in which:-
Figure 1 is a circuit diagram of a prior art battery pack;
Figure 2 is a circuit diagram of a first embodiment of the present invention; and
Figure 3 is a circuit diagram of a second embodiment of the present invention.

Figure 2 shows a circuit diagram of one embodiment of the present invention. The battery pack can be of any suitable shape or size to be connectable in use with the device it is intended to power or with a battery charger to facilitate recharging of the cells. The battery cells and associated circuitry are housed in a casing (not shown). The casing is generally designed to be of such a shape that it conforms with the device in which it is to be used. On the outside of the battery pack casing are three terminals. These are illustrated in Figure 2 and consist, a positive terminal 12, a negative terminal 14 and a third multipurpose terminal 16. The details of terminal 26 will be described in more detail below. The terminals are oriented such that when the battery pack is plugged into the device to be powered or into the battery charger the terminals make electrical and physical contact with either. The internal circuitry of the battery pack is also illustrated in Figure 2. The cells 18 are arranged in series and/or parallel such that a certain voltage is provided by the battery pack.

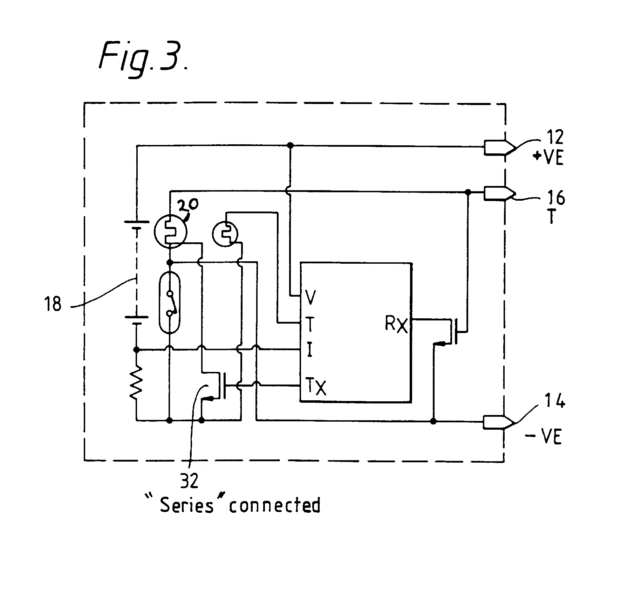

The thermal switch 19 is located against the cells and is connected such that the battery current flows in series with it before reaching the battery power terminal. When the temperature of the cells exceed a predetermined value or when the current exeeds a predetermined value the thermal switch opens thereby interrupting the current flow. An additional multiplexing switch 32, shown as a solid state device, is used in a parallel connection with the thermistor as shown in Figure 2 or in series with the thermistor as shown in Figure 3 to implement the multipurpose effect of the "T" terminal.

The battery pack further includes a microprocessor based circuit 30 which is capable of management of the battery functions. The addition of the microprocesser makes the battery pack an "intelligent battery pack". Such intelligent battery packs are described in more detail in co-pending applications EP-A-0 545 747 and FR-A-2 706 083. The intelligent battery pack is able to provide charge control during recharge of the cells, charge monitoring during discharge and charge (for the rechargeable battery pack), display battery conditions and possibly transmit the battery conditions to external devices or equipment. The microprocessor may be replaced with a microcomputer of the microcontroller type or an ASIC chip designed for dedidicated battery management control functions. The microcontroller circuitry is connected to both the negative and positive terminals and the "T" terminal and the multiplexing transistor switch 32.

When the transistor is off the "T" terminal acts as though it is directly connected to the thermistor. Thus the battery pack can act as a non-intelligent battery pack and thermistor can be accessed for cell temperature measurement through the measurement of its resistance. The microprocessor does not contribute to the function of the battery pack in this mode, apart from in those activities listed above and described in EP-A-0 545 747 and FR-A-2 706 083. On the other hand when a pullup voltage or constant current is connected to the "T" terminal and the transistor 32 is switched on and off such as to provide information (digitally or in an analog manner), the battery pack is capable of operating in a substantially different manner. At room temperature the thermistor resistance used in the standard video pack is typically 10 KΩ. When the transistor 32 is on, its resistance is typically less than 50 Ω The pull-up voltage or constant current at the device is chosen to enable differential of the logical 1 and 0 states over the desired operating temperature ranges. Once the device generates a signal, for example requesting the microprocessor to transmit the state of charge of the battery, that is recognised by the microprocessor communication between the microprocessor and the device is established. At the end of the data exchange period, the pullup voltage or current is removed and the "T" terminal can be once again used for cell temperature measurements. The same battery pack can be used for both intelligent and non-intelligent devices with typically (but not necessarily) the intelligent device initiating communication on the multipurpose "T" terminal /data bus of the battery pack.

In another embodiment shown in Figure 3 the multiplexing transistor 32 is in series with the thermistor 20. In this embodiment the ON state of the transistor 32 is the normal default mode. Cell temperature measurements can be made through the "T" terminal. On the otherhand when there is a pull-up voltage or constant current on the "T" terminal switching the transistor on, the microprocessor can switch the transistor 32 on and off such as to provide digital information to the device then revert the ON state, ready to accept information or ready for cell temperature measurements. Again the multiplexing transistor permits the intelligent device to use the "T" terminal as a data bus thus realising an intelligent battery pack or as a non-intelligent pack where no data exchange is required. The transistor switch 32 is shown external to the microcontroller for clear illustration of the principle; for cost savings it may be incorporated within the microcontroller or ASIC circuit. The choice of series or parallel implementation of the multiplexing transistor switch is decided upon depending on the default state of this transistor, its ON resistance, the resistance range of the thermistor and other circuit design specifications.

Clearly it may be possible to implement the invention using different basic circuitry. However, a long as the circuitry is capable of identifying the type of device the battery pack is being used for, the battery pack will be able to operate in the required manner. The microprocessor may be combined with devices other than a transistor to enable facilation of the invention. The external casing of the battery pack may vary from that described and shown as long as the three terminals are provided. The same casing will however be used for both intelligent devices and non-intelligent devices.

In the present invention the casing is shown as having three terminals. Clearly this number is the minimum requirement. There may be embodiments where further terminals are required which are not associated with the operations described herein. In addition the scheme described herein may be used with other "intelligent battery packs" other than that described in EP-A-0 545 747 and FR-A-2 706 083.

## Claims

1. A battery pack arrangement having a switching means capable of switching the operation of the battery pack from one mode to another in response to an external signal generated by equipment being powered by the battery pack.

2. The battery pack of claim 1, wherein the battery pack includes a casing adapted to mate with the equipment and make physical and electrical connection thereto.

3. The battery pack of claim 1 or claim 2, wherein the battery pack includes a negative (14), and a positive (12), terminal which make electrical connection with respective terminals of the equipment.

4. The battery pack of any preceding claim, further including a multipurpose terminal (16) capable of operating in a first mode when connected to a first type of equipment and capable of operating in a second mode when connected to a second type of equipment and interchangeable from the first mode to the second mode in response to a signal generated by one of the types of equipment.

5. The battery pack of claim 4, wherein the first type of equipment is intelligent and produces said signal and wherein in the first mode the multipurpose terminal (16) acts as data bus.

6. The battery pack of claim 4 or claim 5, wherein the second type of equipment is non-intelligent equipment and wherein in the second mode of operation the multipurpose terminal (16) acts as a thermal isolation means which open circuits the battery pack if the temperature of the cells exceeds a predetermined threshold.

7. The battery pack of any preceding claim, wherein the switching means include a microprocessor device (30) and a transistor device (32).

8. The battery pack of any preceding claim for use with both a video camera and a computer.

9. Portable electrical apparatus adapted to receive a battery pack according to any preceding claim.

## Patentansprüche

1. Batteriepaketanordnung mit einem Schaltungsmittel, das das Batteriepaket als Reaktion auf ein von dem durch das Batteriepaket gespeisten Gerät erzeugtes externes Signal von einem Betriebsmodus in einen anderen Betriebsmodus schalten kann.

2. Batteriepaket nach Anspruch 1, bei dem das Batteriepaket ein Gehäuse umfaßt, das so ausgebildet ist, daß es an das Gerät angepaßt ist und einen physischen und elektrischen Kontakt zu diesem herstellt.

3. Batteriepaket nach Anspruch 1 oder Anspruch 2, bei dem das Batteriepaket einen negativen Anschluß (14) und einen positiven Anschluß (12) umfaßt, die in elektrischer Verbindung zu den entsprechenden Anschlüssen des Geräts stehen.

4. Batteriepaket nach einem der vorhergehenden Ansprüche, das darüber hinaus einen Mehrzweckanschluß (16) umfaßt, der in einem ersten Modus arbeiten kann, wenn er mit einem ersten Gerätetyp verbunden ist und in einem zweiten Modus arbeiten kann, wenn er mit einem zweiten Gerätetyp verbunden ist, und als Reaktion auf ein von einem der Gerätetypen erzeugtes Signal von dem ersten Modus in den zweiten Modus gebracht werden kann.

5. Batteriepaket nach Anspruch 4, bei dem der erste Gerätetyp intelligent ist und ein Signal erzeugt und der Mehrzweckanschluß (16) in dem ersten Modus als Datenbus fungiert.

6. Batteriepaket nach Anspruch 4 oder Anspruch 5, bei dem der zweite Gerätetyp nichtintelligent ist und der Mehrzweckanschluß (16) in dem zweiten Modus als thermisches Isolationsmittel fungiert, das den Stromkreis des Batteriepakets öffnet, wenn die Temperatur der Zellen eine vorherbestimmte Schwelle überschreitet.

7. Batteriepaket nach einem der vorhergehenden Ansprüche, bei dem das Schaltungsmittel ein Mikroprozessorbauelement (30) und ein Transistorbauelement (32) umfaßt.

8. Batteriepaket nach einem der vorhergehenden Ansprüche, das sowohl in Verbindung mit einer Videokamera als auch in Verbindung mit einem Computer verwendet werden kann.

9. Tragbares elektrisches Gerät, das so ausgebildet ist, daß es ein Batteriepaket gemäß einem der vorhergehenden Ansprüche aufnehmen kann.

## Revendications

1. Agencement de batterie d'alimentation comportant un moyen de commutation capable de faire passer le fonctionnement de la batterie d'alimentation d'un mode à un autre en réponse à un signal extérieur généré par un équipement destiné à être alimenté par la batterie d'alimentation.

2. Batterie d'alimentation selon la revendication 1, dans laquelle la batterie d'alimentation comporte un boîtier apte à s'adapter à l'équipement et à lui être connecté physiquement et électriquement.

3. Batterie d'alimentation selon la revendication 1 ou la revendication 2, dans laquelle la batterie d'alimentation comporte une borne négative (14) et une borne positive (12) qui réalisent une connexion électrique avec les bornes respectives de l'équipement.

4. Batterie d'alimentation selon l'une quelconque des revendications précédentes, comportant en outre une borne universelle (16) capable de fonctionner dans un premier mode lorsqu'elle est connectée à un premier type d'équipement et capable de fonctionner dans un second mode lorsqu'elle est connectée à un second type d'équipement et pouvant passer du premier mode au second mode en réponse à un signal généré par l'un des types d'équipement.

5. Batterie d'alimentation selon la revendication 4, dans laquelle le premier type d'équipement est intelligent et produit ledit signal et dans laquelle, dans le premier mode la borne universelle (26) agit comme un bus de données.

6. Batterie d'alimentation selon la revendication 4 ou la revendication 5, dans laquelle le second type d'équipement est un équipement non intelligent et dans laquelle, dans le second mode de fonctionnement la borne universelle (16) agit comme un moyen d'isolation thermique qui ouvre les circuits de la batterie d'alimentation si la température des éléments excède un seuil prédéterminé.

7. Batterie d'alimentation selon l'une quelconque des revendications précédentes, dans laquelle le moyen de commutation comporte un dispositif microprocesseur (30) et un dispositif (32) à transistor.

8. Batterie d'alimentation selon l'une quelconque des revendications précédentes, destinée à être utilisée à la fois avec une caméra vidéo et un ordinateur.

9. Appareil électrique portable apte à recevoir une batterie d'alimentation conforme à l'une quelconque des revendications précédentes.
